# EUROPEAN PATENT APPLICATION

(11) **EP 4 462 534 A1**
(43) Date of publication of application: **13.11.2024**
(21) Application number: 24165061.3
(22) Date of filing: 21.03.2024
(51) Int. Cl.: H01M 10/04, H01M 10/0583, H01M 50/103, H01M 50/466

(54) **ELECTRODE ASSEMBLY AND POWER STORAGE CELL**

(30) Priority: 12.05.2023 JP 2023079356
(71) Applicant: TOYOTA JIDOSHA KABUSHIKI KAISHA, Toyota-shi, Aichi-ken, 471-8571 (JP)
(72) Inventor: SUGIHARA, Atsushi, Toyota-shi, 471-8571 (JP); KAKISHITA, Kenichi, Toyota-shi, 471-8571 (JP); IZUMI, Jun, Toyota-shi, 471-8571 (JP); MIMURA, Tetsuya, Toyota-shi, 471-8571 (JP); OHATA, Kota, Toyota-shi, 471-8571 (JP); KURASHITA, Nana, Toyota-shi, 471-8571 (JP); TAKAHASHI, Yuki, Toyota-shi, 471-8571 (JP)
(74) Representative: J A Kemp LLP

(57) **Abstract**

An electrode assembly (100) includes a plurality of electrodes (110, 120) arranged side by side in one direction, and a separator (130) formed in a zigzag shape and configured to insulate the plurality of electrodes from each other. The separator (130) includes a plurality of intervening portions (132a), each of which is interposed between a pair of electrodes, an upper folded portion (132b), a lower folded portion (132c), and an outermost covering portion (132d) collectively covering the upper folded portion and the lower folded portion. The upper folded portion (132a) is connected to the outermost covering portion, and the lower folded portion (132c) is connected to the outermost covering portion.

## Description

### CROSS REFERENCE TO RELATED APPLICATIONS

This non-provisional application is based on Japanese Patent Application No. 2023-079356 filed on May 12, 2023 with the Japan Patent Office, the entire contents of which are hereby incorporated by reference.

### BACKGROUND

### Field

The present disclosure relates to an electrode assembly and a power storage cell.

### Description of the Background Art

Japanese Patent Laying-Open No. 2021-48141 discloses a laminated electrode group that includes a plurality of positive electrodes and a plurality of negative electrodes arranged alternately, and a separator. The separator includes a folded portion formed in a zigzag shape and disposed between the positive electrode and the negative electrode, and a covering portion contiguous with the folded portion. The covering portion is arranged to cover the periphery of the laminated electrode group.

A distal end of the covering portion is connected to a root end of the covering portion by an insulating tape or thermal welding.

### SUMMARY

In the laminated electrode group disclosed in Japanese Patent Laying-Open No. 2021-48141, it is concerned that a positional displacement may occur between the electrodes when the laminated electrode group is transported, when the laminated electrode group is inserted into the cell case, or when a power storage cell including the laminated electrode group is subjected to vibrations.

It is an object of the present disclosure to provide an electrode assembly and a power storage cell capable of preventing a positional displacement from occurring between electrodes.

According to an aspect of the present disclosure, there is provided an electrode assembly including a plurality of electrodes arranged side by side in one direction, and a separator formed in a zigzag shape and configured to insulate the plurality of electrodes from each other. The separator includes: a plurality of intervening portions, each of which is interposed between a pair of electrodes adjacent to each other in the one direction; an upper folded portion which connects an upper end of one intervening portion of the plurality of intervening portions and an upper end of another intervening portion of the plurality of intervening portions which is adjacent to the one intervening portion on one side of the one direction; a lower folded portion which connects a lower end of the one intervening portion of the plurality of intervening portions and a lower end of another intervening portion of the plurality of intervening portions which is adjacent to the one intervening portion on the other side of the one direction; and an outermost covering portion collectively covering the upper folded portion and the lower folded portion. The upper folded portion is connected to the outermost covering portion, and the lower folded portion is connected to the outermost covering portion.

A power storage cell according to an aspect of the present disclosure includes the electrode assembly and a cell case that houses the electrode assembly.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage cell according to an embodiment of the present disclosure;
Fig. 2 is a cross-sectional view of the power storage cell illustrated in Fig. 1;
Fig. 3 is a cross-sectional view of an electrode assembly;
Fig. 4 is a plan view of a separator before being formed in a zigzag shape;
Fig. 5 is a view schematically illustrating a step of forming a separator in a zigzag shape;
Fig. 6 is a plan view schematically illustrating a roller;
Fig. 7 is a perspective view schematically illustrating a step of connecting an electrode tab and a collector tab;
Fig. 8 is a perspective view schematically illustrating a step of bending an electrode tab and a collector tab;
Fig. 9 is a perspective view schematically illustrating a step of inserting the electrode assembly into a case body; and
Fig. 10 is a perspective view schematically illustrating an electrode assembly according to a modification.

### DESCRIPTION OF THE PREFERRED EMBODIMENTS

Embodiments of the present disclosure will be described with reference to the drawings. In the following drawings, the same or corresponding members are denoted by the same reference numerals.

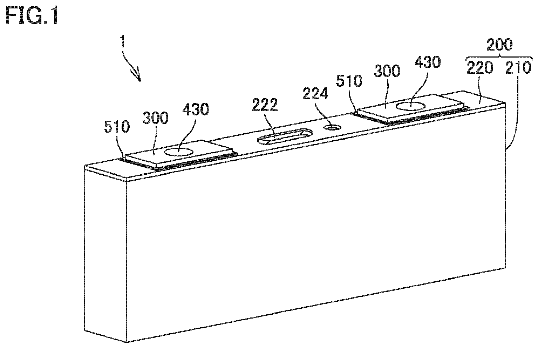

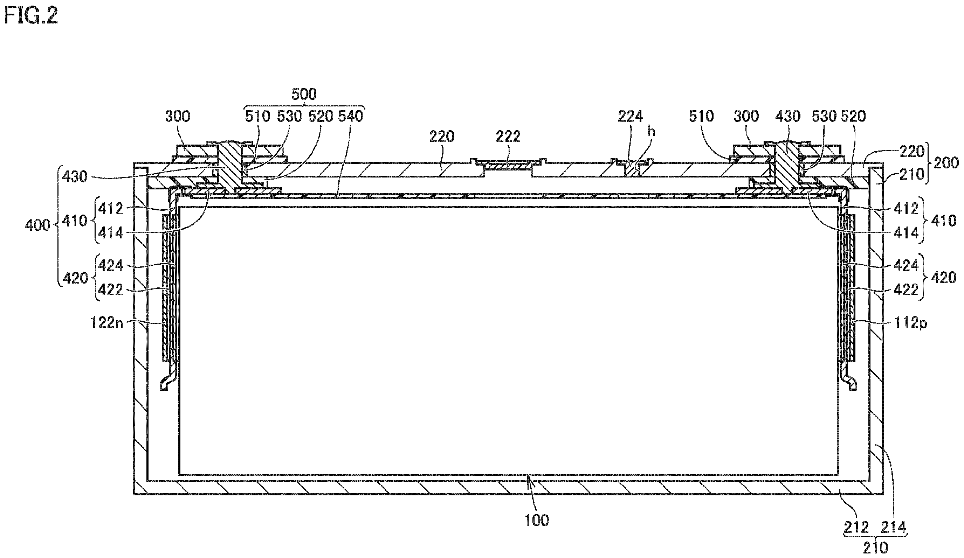

Fig. 1 is a perspective view schematically illustrating a power storage cell 1 according to an embodiment of the present disclosure. Fig. 2 is a cross-sectional view of the power storage cell 1 illustrated in Fig. 1.

As illustrated in Figs. 1 and 2, the power storage cell 1 includes an electrode assembly 100, a cell case 200, an electrolytic solution (not illustrated), a pair of external terminals 300, a pair of connecting members 400, and an insulating member 500.

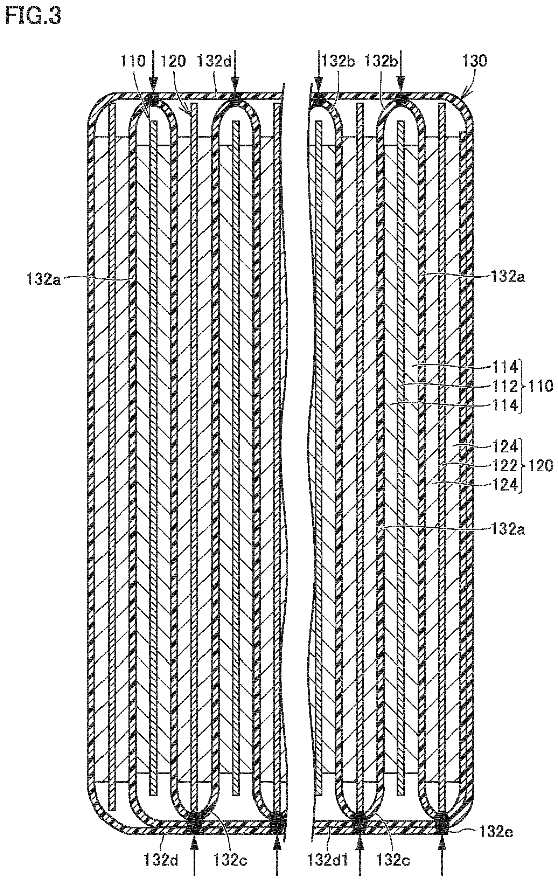

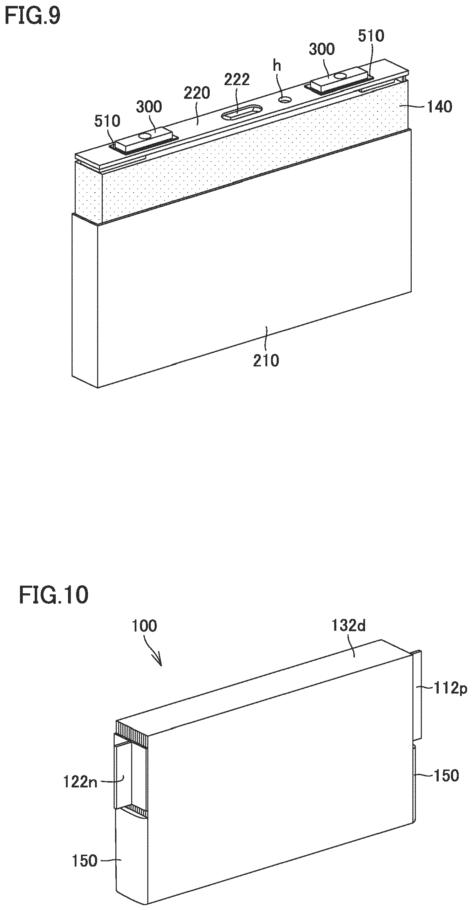

Fig. 3 is a cross-sectional view of an electrode assembly 100. As illustrated in Fig. 3, the electrode assembly 100 includes a plurality of electrodes 110 and 120, a separator 130, and an insulating film 140 (see Fig. 9).

As illustrated in Fig. 3, the plurality of electrodes 110 and 120 are arranged side by side in one direction (the lateral direction in Fig. 3). The plurality of electrodes 110 and 120 include a plurality of positive electrodes 110 and a plurality of negative electrodes 120.

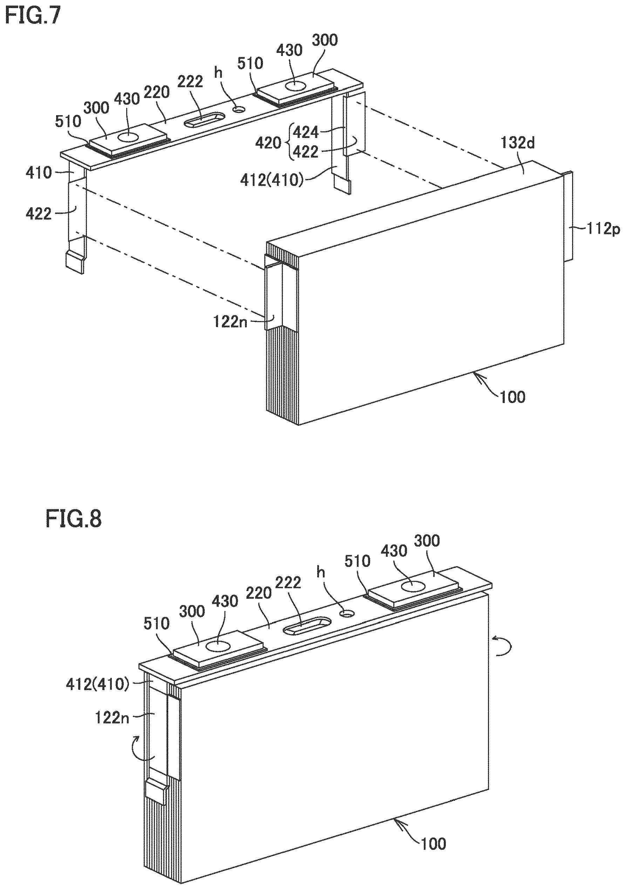

Each positive electrode 110 is formed in a rectangular shape elongated in a width direction (a direction orthogonal to both the one direction and the vertical direction). Each positive electrode 110 includes a positive electrode collector foil 112 and a positive electrode active material layer 114 provided on both surfaces of the positive electrode collector foil 112. As illustrated in Figs. 2 and 7, the positive electrode collector foil 112 includes a positive electrode tab 112p on which the positive electrode active material layer 114 is not provided. The positive electrode tab 112p protrudes toward one side of the width direction (a direction orthogonal to the paper surface of Fig. 3).

Each negative electrode 120 is formed in a rectangular shape elongated in the width direction. Each negative electrode 120 includes a negative electrode collector foil 122 and a negative electrode active material layer 124 provided on both surfaces of the negative electrode collector foil 122. As illustrated in Figs. 2 and 7, the negative electrode collector foil 122 includes a negative electrode tab 122n on which the negative electrode active material layer 124 is not provided. The negative electrode tab 122n protrudes toward the other side of the width direction.

The separator 130 insulates the positive electrode 110 and the negative electrode 120 from each other. The separator 130 is made of an insulating material, and has minute voids that allow ions to pass through. As illustrated in Fig. 3, the separator 130 is formed in a zigzag shape.

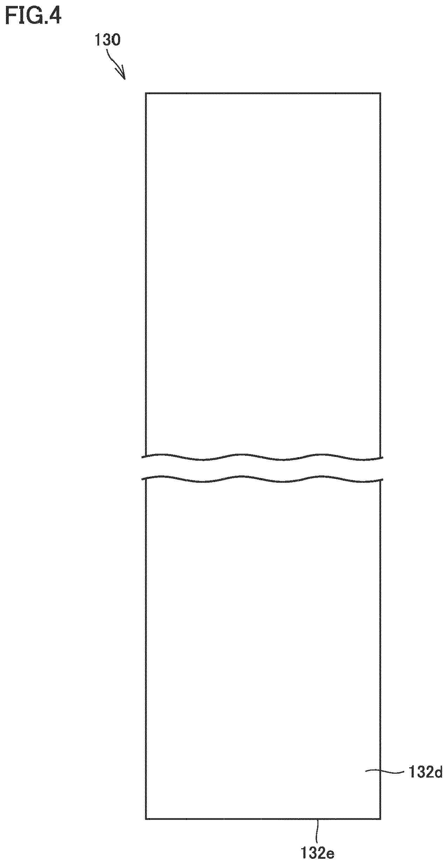

Fig. 4 is a plan view of the separator before being formed in a zigzag shape. As illustrated in Fig. 4, the separator 130 has a rectangular shape before being formed in a zigzag shape. The separator 130 is formed in a zigzag shape and is arranged between the electrodes 110 and 120. The separator 130 includes a plurality of intervening portions 132a, a plurality of upper folded portions 132b, a plurality of lower folded portions 132c, and an outermost covering portion 132d.

Each intervening portion 132a is interposed between a pair of electrodes 110 and 120 adjacent to each other in the one direction. In other words, each intervening portion 132a functions to insulate the positive electrode 110 and the negative electrode 120 from each other. Each intervening portion 132a is formed in a rectangular shape.

Each upper folded portion 132b connects an upper end of one intervening portion 132a of the plurality of intervening portions 132a and an upper end of another intervening portion 132a of the plurality of intervening portions 132a which is adjacent to the one intervening portion 132a on one side of the one direction. In the present embodiment, the upper folded portion 132b is disposed above the positive electrode 110.

Each lower folded portion 132c connects a lower end of one intervening portion 132a of the plurality of intervening portions 132a and a lower end of another intervening portion 132a of the plurality of intervening portions 132a which is adjacent to the one intervening portion 132a on the other side of the one direction. In the present embodiment, the lower folded portion 132c is disposed below the negative electrode 120. In other words, the negative electrode 120 is disposed above the lower folded portion 132c.

The outermost covering portion 132d collectively covers each upper folded portion 132b and each lower folded portion 132c. More specifically, the outermost covering portion 132d collectively covers all of the electrodes 110 and 120, all of the intervening portions 132a, all of the upper folded portions 132b and all of the lower folded portions 132c while being wound around a central axis parallel to the width direction.

As illustrated in Fig. 3, the outermost covering portion 132d includes a two-layer portion 132d1 composed of two layers. In the example illustrated in Fig. 3, the two-layer portion 132d1 is in contact with the lower folded portion 132c.

The outermost covering portion 132d includes a terminal end 132e (see Figs. 3 and 4) provided at a position not overlapping with the positive electrode active material layer 114 and the negative electrode active material layer 124 in one direction. The terminal end 132e is provided at a position facing the upper folded portion 132b or the lower folded portion 132c. In the present embodiment, the terminal end 132e of the outermost covering portion 132d is provided below each of the electrodes 110 and 120. As illustrated in Fig. 3, the terminal end 132e is provided below a lower end of the negative electrode collector foil 122 of the negative electrode 120.

As illustrated in Fig. 3, the outermost covering portion 132d is connected to each upper folded portion 132b and each lower folded portion 132c. Specifically, heat is applied to a portion of the outermost covering portion 132d overlapping with each upper folded portion 132b from the outside of this portion by laser irradiation or the like as indicated by an arrow in Fig. 3, and heat is applied to a portion of the outermost covering portion 132d overlapping with each lower folded portion 132c from the outside of this portion by laser irradiation or the like as indicated by arrows in Fig. 3. Thereby, the outermost covering portion 132d is connected (welded) to each upper folded portion 132b and each lower folded portion 132c. Specifically, the two-layer portion 132d1 and the terminal end 132e are connected (welded) to the lower end portion of the negative electrode collector foil 122 of the negative electrode 120.

The outermost covering portion 132d may be connected (welded) to each upper folded portion 132b and each lower folded portion 132c by other heating means such as hot pressing, or may be connected (adhered) to each upper folded portion 132b and each lower folded portion 132c by using an adhesive material. When an adhesive material is used, the adhesive material may be applied to the entire inner surface of the outermost covering portion 132d, or the adhesive material may be applied in spots or lines to a portion of the inner surface of the outermost covering portion 132d facing the upper folded portions 132b and the lower folded portions 132c.

The insulating film 140 collectively covers the peripheral surface and bottom surface of the plurality of electrodes 110 and 120 and the separator 130. In Fig. 9, the insulating film 140 is indicated by dots.

The cell case 200 houses the electrode assembly 100. The cell case 200 contains an electrolytic solution (not illustrated). The cell case 200 is sealed. The cell case 200 includes a case body 210 and a lid 220.

The case body 210 has an opening that opens upward. The case body 210 is made of a metal such as aluminum. As illustrated in Fig. 2, the case body 210 includes a bottom wall 212 and a peripheral wall 214. The bottom wall 212 is formed in a rectangular flat plate shape. The peripheral wall 214 rises from the bottom wall 212. The peripheral wall 214 is formed in a quadrangular cylindrical shape. The length of the peripheral wall 214 in the width direction is longer than the length of the peripheral wall 214 in the thickness direction. The length of the peripheral wall 214 in the height direction is longer than the length of the peripheral wall 214 in the thickness direction.

The lid 220 closes the opening of the case body 210. The lid 220 is connected to the opening by welding or the like. The lid 220 is formed in a flat plate shape. The lid 220 is made of a metal such as aluminum. The lid 220 includes a pressure release valve 222 and a sealing member 224.

The pressure release valve 222 is formed at a central portion of the lid 220. The pressure release valve 222 is configured to break when the internal pressure of the cell case 200 becomes equal to or higher than a predetermined pressure. When the pressure release valve 222 is broken, the gas in the cell case 200 is released to the outside of the cell case 200 through the pressure release valve 222, which reduces the internal pressure of the cell case 200.

The sealing member 224 seals a liquid injection port h formed on the lid 220. The liquid injection port h is a through hole for injecting an electrolytic solution into the cell case 200 in the manufacturing process of the power storage cell 1. After the electrolytic solution is injected into the case body 210 through the liquid injection port h, the liquid injection port h is sealed by the sealing member 224.

The pair of external terminals 300 is fixed to the cell case 200. One of the pair of external terminals 300 is a positive external terminal, and the other is a negative external terminal. Each external terminal 300 is fixed to an upper surface of the lid 220 via an upper insulating portion 510 which will be described later. Each external terminal 300 is made of a metal such as aluminum. Each external terminal 300 is formed, for example, in a rectangular parallelepiped shape. A bus bar (not illustrated) is connected to each external terminal 300 by welding or the like.

The pair of connecting members 400 (see Fig. 2) connects a plurality of electrode tabs 112p and a plurality of electrode tabs 122n to the pair of external terminals 300, respectively. More specifically, one of the pair of connecting members 400 connects the plurality of positive electrode tabs 112p to the positive external terminal 300, and the other connecting member 400 connects the plurality of negative electrode tabs 122n to the negative external terminal 300. Since the pair of connecting members 400 have substantially the same structure, only one connecting member 400 will be described below.

The connecting member 400 includes a collector tab 410, a subtab 420, and a connecting pin 430.

The collector tab 410 has a side portion 412 and an upper portion 414. The side portion 412 is arranged on a side surface of the electrode assembly 100 in the width direction. The upper portion 414 is arranged on an upper surface of the electrode assembly 100. The upper portion 414 extends inward in the width direction from an upper end of the side portion 412.

The subtab 420 connects the plurality of positive electrode tabs 112p to the collector tab 410. One end 422 of the subtab 420 is connected to the plurality of positive electrode tabs 112p by welding or the like, and the other end 424 of the subtab 420 is connected to the side portion 412 of the collector tab 410 by welding or the like.

The connecting pin 430 connects the collector tab 410 to the external terminal 300. The connecting pin 430 connects the upper portion 414 to the external terminal 300. Specifically, the lower end of the connecting pin 430 is inserted into a through hole provided on the upper portion 414 and is connected to the upper portion 414 by welding or the like, and the upper end of the connecting pin 430 is inserted into a through hole provided on the external terminal 300 and is connected to the external terminal 300 by welding, caulking or the like.

The insulating member 500 insulates the cell case 200 and the connecting member 400 from each other. The insulating member 500 includes an upper insulating portion 510, a lower insulating portion 520, an insulator 530, and an insulating plate 540.

The upper insulating portion 510 is fixed to the upper surface of the lid 220. The upper insulating portion 510 is disposed between the lid 220 and the external terminal 300. The upper insulating portion 510 is provided with an insertion hole through which the connecting pin 430 is inserted.

The lower insulating portion 520 is fixed to the lower surface of the lid 220. The lower insulating portion 520 is disposed between the lid 220, and the upper portion 414 and a lower portion of the connecting pin 430. The lower insulating portion 520 is provided with an insertion hole through which the connecting pin 430 is inserted.

The insulator 530 is disposed between the connecting pin 430 and the lid 220. The insulator 530 is formed in a cylindrical shape, and is configured to surround the connecting pin 430.

The insulating plate 540 is fixed to the lower surface of the upper portion 414. The insulating plate 540 is disposed on the electrode assembly 100. A through hole is formed in a portion of the insulating plate 540 located below the pressure release valve 222 and a portion of the insulating plate 540 located below the liquid injection port h.

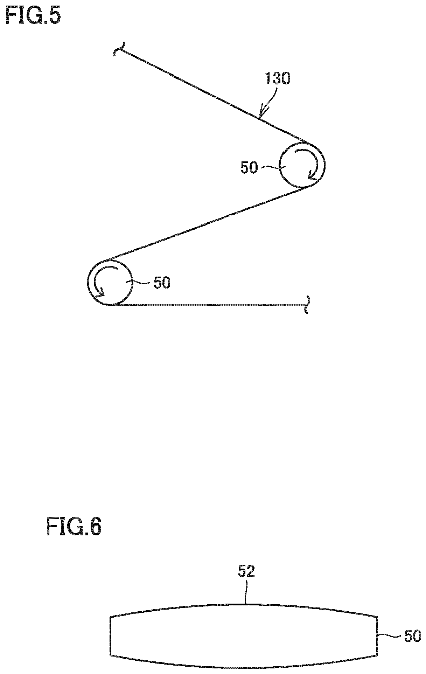

Next, a process of manufacturing the power storage cell 1 will be described with reference to Figs. 5 to 9.

First, as illustrated in Fig. 5, while the separator 130 is being formed in a zigzag shape by using a roller 50, each electrode 110 and each electrode 120 are alternately disposed between a pair of intervening portions 132a. As illustrated in Fig. 6, the roller 50 is formed in a crown shape. In other words, the roller 50 is formed in a shape such that its diameter increases from an end edge of the roller 50 in the rotational axis direction toward a central portion 52. This prevents wrinkles from being formed in the central portion of the separator 130 in the width direction (parallel to the rotation axis of the roller 50) when folding the separator 130.

Then, after winding the outermost covering portion 132d of the separator 130, for example, by irradiating a laser beam from the outside of the outermost covering portion 132d, the two-layer portion 132d1 (including the terminal end 132e) is connected (welded) to each lower folded portion 132c, each lower folded portion 132c is connected (welded) to the lower end portion of each negative electrode collector foil 122, and each upper folded portion 132b is connected (welded) to the outermost covering portion 132d. At this time, it is preferable that the terminal end 132e is firstly connected. It is preferable to apply a pressure in a non-contact manner (such as by injecting dry air) to the laser irradiation portion.

Next, as illustrated in Fig. 7, one end 422 of the subtab 420 is connected to the plurality of electrode tabs 112p and 122n by welding or the like. Then, as indicated by arrows in Fig. 8, one end 422 and the plurality of electrode tabs 112p and 122n are bent in such a manner that the end 422 of the subtab 420 is in contact with the side portion 412 of the collector tab 410.

Subsequently, as illustrated in Fig. 9, after the peripheral surface and bottom surface of the plurality of electrodes 110, 120 and the separator 130 are collectively covered with the insulating film 140, the electrode assembly 100 is inserted into the case body 210. Then, the lid 220 is welded to the case body 210 to close the opening.

Thereafter, the electrolytic solution is supplied into the cell case 200 through the liquid injection port h, and the liquid injection port h is sealed with the sealing member 224.

As described above, in the electrode assembly 100 according to the present embodiment, since the relative displacement of the upper folded portion 132b and the lower folded portion 132c with respect to the outermost covering portion 132d is prevented, the positional displacement of the electrodes 110 and 120 is prevented.

As illustrated in Fig. 10, the electrode assembly 100 may further include a liquid holding member 150 configured to hold an electrolytic solution. The liquid holding member 150 is different from the separator 130. The liquid holding member 150 is made of, for example, a porous material. The liquid holding member 150 is provided at an end portion of the plurality of electrodes 110 and 120 and the separator 130 in the width direction. The liquid holding member 150 may be provided at an upper end portion or a lower end portion of the plurality of electrodes 110 and 120 and the separator 130.

It will be appreciated by those skilled in the art that the exemplary embodiments described above are specific examples of the following aspects.

### [Aspect 1]

An electrode assembly comprising:
a plurality of electrodes arranged side by side in one direction; and
a separator formed in a zigzag shape and configured to insulate the plurality of electrodes from each other,
wherein the separator includes:
   a plurality of intervening portions, each of which is interposed between a pair of electrodes adjacent to each other in the one direction;
   an upper folded portion which connects an upper end of one intervening portion of the plurality of intervening portions and an upper end of another intervening portion of the plurality of intervening portions which is adjacent to the one intervening portion on one side of the one direction;
   a lower folded portion which connects a lower end of the one intervening portion of the plurality of intervening portions and a lower end of another intervening portion of the plurality of intervening portions which is adjacent to the one intervening portion on the other side of the one direction; and
   an outermost covering portion collectively covering the upper folded portion and the lower folded portion,
   the upper folded portion is connected to the outermost covering portion, and
   the lower folded portion is connected to the outermost covering portion.

According to this electrode assembly, since the relative displacement of the upper folded portion and the lower folded portion with respect to the outermost covering portion is prevented, the positional displacement of the electrodes is prevented.

### [Aspect 2]

The electrode assembly according to aspect 1, wherein the outermost covering portion includes a terminal end provided at a position facing the upper folded portion or the lower folded portion, and the terminal end is connected to the electrode.

According to this aspect, since the connection strength of the outermost covering portion at the terminal end is improved, the peeling of the outermost covering portion is inhibited. Further, since the terminal end does not overlap with the electrode in one direction, the surface pressure acting on the electrode due to the presence of the terminal is prevented from becoming uneven.

### [Aspect 3]

The electrode assembly according to aspect 1 or 2, wherein the outermost covering portion includes a two-layer portion composed of two layers, and the two-layer portion is connected to the electrode.

According to this aspect, the positional displacement of the electrode with respect to the separator is more reliably prevented.

### [Aspect 4]

The electrode assembly according to any one of aspects 1 to 3, wherein
the separator further comprises a liquid holding member different from the separator and configured to hold an electrolytic solution, and
the liquid holding member is provided at at least one of an end portion of the separator in a vertical direction and an end portion of the separator in a width direction orthogonal to both the one direction and the vertical direction.

### [Aspect 5]

A power storage cell comprising:
an electrode assembly according to any one of aspects 1 to 4; and
a cell case that houses the electrode assembly.

According to this aspect, since the electrolytic solution released from the negative electrode is held by the liquid holding member, the negative electrode absorbs the electrolytic solution again, which thereby prevents the negative electrode from becoming short of the electrolytic solution.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. An electrode assembly (100) comprising:
a plurality of electrodes (110, 120) arranged side by side in one direction; and
a separator (130) formed in a zigzag shape and configured to insulate the plurality of electrodes from each other,
wherein the separator (130) includes:
a plurality of intervening portions (132a), each of which is interposed between a pair of electrodes adjacent to each other in the one direction;
an upper folded portion (132b) which connects an upper end of one intervening portion of the plurality of intervening portions and an upper end of another intervening portion of the plurality of intervening portions which is adjacent to the one intervening portion on one side of the one direction;
a lower folded portion (132c) which connects a lower end of the one intervening portion of the plurality of intervening portions and a lower end of another intervening portion of the plurality of intervening portions which is adjacent to the one intervening portion on the other side of the one direction; and
an outermost covering portion (132d) collectively covering the upper folded portion and the lower folded portion,
the upper folded portion is connected to the outermost covering portion, and
the lower folded portion is connected to the outermost covering portion.

2. The electrode assembly according to claim 1, wherein
the outermost covering portion (132d) includes a terminal end (132e) provided at a position facing the upper folded portion or the lower folded portion, and
the terminal end is connected to the electrode.

3. The electrode assembly according to claim 1 or 2, wherein
the outermost covering portion includes a two-layer portion (132d1) composed of two layers, and
the two-layer portion is connected to the electrode.

4. The electrode assembly according to any one of claims 1 to 3, wherein
the separator further comprises a liquid holding member (150) different from the separator and configured to hold an electrolytic solution, and
the liquid holding member is provided at at least one of an end portion of the separator in a vertical direction and an end portion of the separator in a width direction orthogonal to both the one direction and the vertical direction.

5. A power storage cell comprising:
an electrode assembly (100) according to any one of claims 1 to 4; and
a cell case (200) that houses the electrode assembly.
